# EUROPEAN PATENT APPLICATION

(11) **EP 4 707 903 A2**
(43) Date of publication of application: **11.03.2026**
(21) Application number: 24797296.1
(22) Date of filing: 02.04.2024
(51) Int. Cl.: G02B 30/28, H04N 13/305, G02B 30/29, G02B 3/00, G02B 6/00

(54) **STEREOSCOPIC IMAGE DISPLAY DEVICE HAVING MULTILAYER FUNCTIONAL FILM STRUCTURE**

(30) Priority: 24.04.2023 KR 20230053282
(71) Applicant: Epitone, Inc., San Diego, California 92122 (US)
(72) Inventor: LEE, Chan Hee, Incheon 22020 (KR)
(74) Representative: RGTH
(86) International application number: PCT/KR2024/004214
(87) International publication number: WO 2024/225635

(57) **Abstract**

The present invention relates to a stereoscopic image display device in which a multilayer functional film structure applied to a head-up display device of a vehicle or the like is improved to improve manufacturing convenience and uniformity of 3D resolution. According to the present invention, a thick laminated base film in the multilayer functional film structure applied to the head-up display device is replaced with a glass plate, and thus the shrinkage and expansion rate of a lenticular lens is minimized, and manufacturing convenience and uniformity of 3D resolution can be improved to ensure reliability. In addition, deformation of a lens layer can be prevented even when the thickness of a lenticular lens formation layer is minimized, and the attachment structure of the lens to the glass plate can be simplified to ensure the uniformity of the lens, and thus marketability can be improved. In addition, by combining two lenses having different refractive indices in the lenticular lens, the height (SAG) of the lenticular lens can be made large while reducing the curvature to resolve difficulties in the manufacturing process, and thus productivity can be improved.

## Description

### TECHNICAL FIELD

The disclosure relates to a stereoscopic image display device having a multi-layer functional film structure and, more particularly, to a stereoscopic image display device configured to improve a multi-layer functional film structure used in head-up display (HUD) devices for vehicles or the like to improve manufacturing convenience and the uniformity of three-dimensional (3D) resolution.

### BACKGROUND ART

The information disclosed in this section is only provided for an understanding of background information of embodiments of the disclosure and should not be taken as a description of the prior art.

Head-up display devices are significantly increasingly used to improve driver safety and comfort while driving. Head-up displays show instrument panel information, such as vehicle speed, fuel level, and engine revolutions per minute, along with navigation information. Beyond this information, augmented reality applications may provide a wider variety of information.

For example, lane change directions, hazardous objects, pedestrian locations, forward building information, and the like may be displayed, as aligned with objects or the panoramic view.

However, conventional head-up display devices project virtual images at a fixed distance (typically 2.5 meters), and have a small horizontal field of view of 5 degrees or less. Recently, to improve these, HUD devices have been developed or released as prototypes, in which the virtual image distance is increased to 10 meters and the horizontal field of view is increased to 10 degrees. Furthermore, there is a growing demand to increase the field of view to 20 degrees or more.

To implement this, large display panels need to be used to resolve the sun load issue caused by sunlight. However, as the panel size increased, there was a problem where the thickness of the base film in 3D HUDs using lenticular lenses significantly increased. Furthermore, it is critically important to ensure the uniformity of the lenticular lens over a large area.

In addition, manufacturing thick base films requires a plurality of soft molding processes (e.g., for a base film layered structure), thereby making it difficult to ensure the uniformity of lenticular lens, thereby resulting in the problem that the production process for achieving highquality 3D images is difficult.

Therefore, to provide HUDs using large display panels, the development of a new 3D optical multi-layer film structure was urgently needed, which is thin while having a new structure capable of ensuring the uniformity of the lenticular lens.

Prior art documents include Korean Patent Application Publication No. 10-2022-0032448 (published on March 15, 2022; titled "Method and Apparatus for Correcting Crosstalk")

The information disclosed in the Background section is technical information that the inventors possessed for, or acquired during, derivation of embodiments of the disclosure and should not be taken as known technology disclosed to the public before the filing of the embodiments of the disclosure.

### DISCLOSURE

### Technical Problem

To solve the above-described problems occurring in the related art, an objective of the disclosure is to provide a stereoscopic image display device having a multi-layer functional film structure which may replace a thick laminated base film with glass to minimize the shrinkage and expansion rates of a lenticular lens, thereby ensuring reliability.

An objective of the disclosure is to provide a stereoscopic image display device having a multi-layer functional film structure which may minimize the thickness of the lenticular lens layer to prevent deformation of the lens layer due to load and simplify the structure, thereby ensuring lens uniformity.

An objective of the disclosure is to provide a stereoscopic image display device having a multi-layer functional film structure which may combine two lenses having different refractive indices to reduce the curvature while increasing the lenticular lens height (SAG), thereby resolving difficulties in manufacturing processes.

The objectives of the disclosure are not limited to the foregoing description, and other objectives not explicitly disclosed herein will be clearly understood by a person having ordinary knowledge in the art from the description provided hereinafter.

### Technical Solution

In order to achieve at least one of the above objectives, the disclosure provides a stereoscopic image display device having a multilayer functional film structure, the stereoscopic image display device including: a backlight unit (10); a display panel (20) disposed on a front surface of the backlight unit (10); and a three-dimensional optical lens layer (30) having a multi-layer structure, wherein the three-dimensional optical lens layer (30) is provided on a front surface of a glass substrate (21) and includes a first glass plate (50) and a polymer-based lenticular lens array (40).

The lenticular lens array (40) may include: an attachment layer (41) provided on the first glass plate (50); a lens layer (43) provided on a front surface of the attachment layer (41) and including continuously-arranged lenticular lenses; and a protective layer (45) having a lower refractive index than the lens layer (43) and provided on a front surface of the lens layer (43).

The lenticular lens array (40) may include: an attachment layer (41) provided on the first glass plate (50); a lens layer (43) provided on a front surface of the attachment layer (41) and including continuously-arranged lenticular lenses; a protective layer (45) having a lower refractive index than the lens layer (43) and provided on a front surface of the lens layer (43); and a second glass plate (55) attached to a front surface of the protective layer (45).

The attachment layer (41) may be attached to the front surface of the first glass plate (50) as dots or a thin film using one of deposition, printing, and application.

The second glass plate (55) may be attached to the front surface of the protective layer (45) as a thin film by one of deposition and printing.

The lenticular lenses of the lens layer (43) may have a semicircular cross-section, such as " 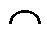 ", and are disposed on the front surface of the attachment layer (41) to provide different images to left and right eyes of a user, respectively, to provide a three-dimensional image.

### Advantageous Effects

According to the disclosure as described above, replacing the thick laminated base film with a glass plate for the multi-layer functional film structure used in HUD devices for vehicles or the like may minimize the shrinkage and expansion rates of the lenticular lens to improve manufacturing convenience and the uniformity of 3D resolution, thereby securing reliability.

In addition, even in the case that the thickness of a lenticular lens formation layer is minimized, deformation of the lens layer may be prevented and the structure for attaching the lens to the glass plate may be simplified to ensure lens uniformity, thereby improving product quality.

Furthermore, combining two lenses having different refractive indices may reduce the curvature while increasing the lenticular lens height (SAG), thereby resolving difficulties in manufacturing processes.

In addition, the disclosure has a variety of effects with excellent versatility depending on the embodiment, and such effects may be clearly understood from the following description of embodiments.

### DESCRIPTION OF DRAWINGS

FIG. 1 is a schematic cross-sectional view illustrating a stereoscopic image display device having a multi-layer functional film structure according to the disclosure.
FIG. 2 is a schematic cross-sectional view illustrating a stereoscopic image display device having a multi-layer functional film structure according to an embodiment of the disclosure.
FIG. 3 is a schematic view illustrating refractive indices of the stereoscopic image display device having a multi-layer functional film structure according to the disclosure.
FIG. 4 is a graph illustrating the comparison of the lens shrinkage rate of the stereoscopic image display device having a multi-layer functional film structure according to the disclosure.
FIG. 5 is a graph illustrating the comparison of the LCD surface temperature of the stereoscopic image display device having a multi-layer functional film structure according to the disclosure.

### MODE FOR INVENTION

Advantages and features of the disclosure, as well as methods of realizing the same, will be more clearly understood from the following detailed description of embodiments when taken in conjunction with the accompanying drawings. However, the disclosure is not limited to specific embodiments to be described hereinafter but should be understood as including a variety of modifications, equivalents, and alternatives within the spirit and scope of the disclosure. Rather, these embodiments are provided so that the description of the disclosure will be complete and will fully convey the scope of the disclosure to a person having ordinary skill in the art in the technical field to which the disclosure pertains. In the following description of the disclosure, a detailed description of related known technology will be omitted when the description may render the subject matter of the disclosure unclear.

The terminologies used herein are for the purpose of describing particular embodiments only and are not intended to be limiting. As used herein, the singular forms are intended to include the plural forms as well, unless the context clearly indicates otherwise.

Terms, such as "comprise/include" or "have," or the like, as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance. Although terms, such as "first", "second", or the like, may be used to describe various components, these components should not be conceived of as being limited by these terms. These terms are only used to distinguish a component from another component.

Hereinafter, embodiments according to the disclosure will be described in detail with reference to the accompanying drawings, in which identical or similar components are given the same reference numerals, and repeated descriptions thereof will be omitted.

First, a backlight unit 10 is a configuration able to emit a wide-angle light source on a surface to convert a two-dimensional (2D) image generated by a picture generation unit (PGU), which is implemented as a display panel 20 disposed in front of the backlight unit 10, to be displayed as a virtual image on the windshield of a vehicle. The configuration of the backlight unit 10 and the display panel 20 may be varied depending to the requirements of a person having ordinary knowledge in the art and thus is not limited to any specific configuration.

It is desirable for the backlight unit 10 to be implemented as a highbrightness backlight having a divergence angle of 10 degrees or less so that the image may be seen clearly even in strong sunlight.

According to the disclosure, a 3D optical lens layer 30 may be disposed on the front portion of the display panel 20 to minimize the shrinkage or expansion rate of a lenticular lens array 40 due to heat generated by the backlight unit 10 and sunlight, thereby improving the uniformity of the 3D resolution of an HUD provided in a vehicle or the like.

To achieve this, the 3D optical lens layer 30 having a multi-layer structure is disposed on the front surface of a glass substrate 21 of the display panel 20. The 3D optical lens layer includes a first glass plate 50 and a polymer-based lenticular lens array 40 for providing stereoscopic images, and is disposed to block heat transfer to the lenticular lens array 40 through the display panel. This arrangement may minimize the shrinkage or expansion rate of the lenticular lens array 40 due to the backlight unit 10 and sunlight.

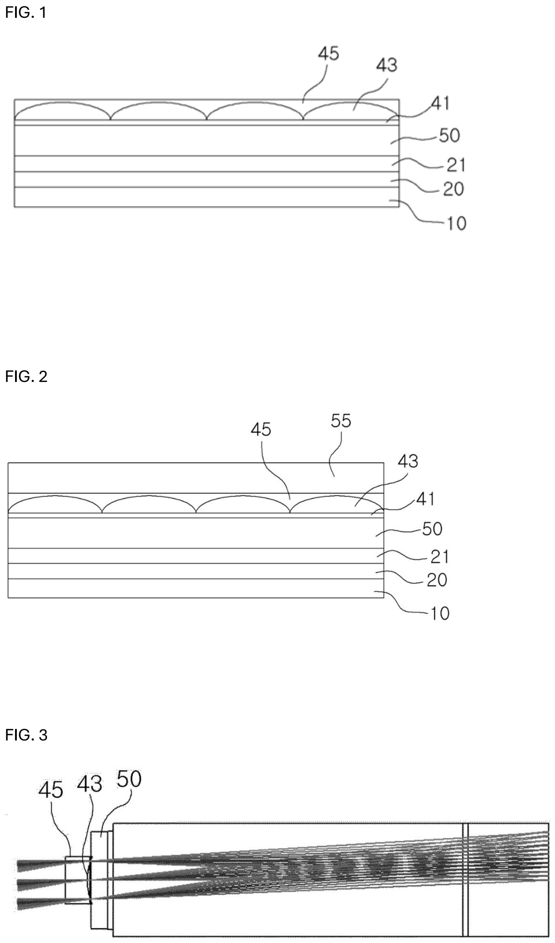

As shown in FIG. 1, the lenticular lens array 40 includes an attachment layer 41 configured to be fixed to one surface of the first glass plate 50 in contact with the glass substrate 21 of the display panel 20, a lens layer 43 provided on the front surface of the attachment layer 41 and including continuously-arranged lenticular lenses, and a protective layer 45 having a lower refractive index than the lens layer 43 and provided on the front surface of the lens layer 43.

In this case, it is desirable that the lens layer 43 including the arrangement of lenticular lenses may be configured to minimize the thickness with respect to the first glass plate 50 while simplifying the structure to prevent deformation of the lens layer due to load from the protective layer, a second glass plate, and the like described later, thereby ensuring uniformity in the arrangement of the lenticular lenses.

According to the disclosure, as shown in FIG. 2, the lenticular lens array 40 includes an attachment layer 41 provided on the first glass plate 50, a lens layer 43 provided on the front surface of the attachment layer 41 and including continuously-arranged lenticular lenses, a protective layer 45 having a lower refractive index than the lens layer 43 and provided on the front surface of the lens layer 43, and a second glass plate 55 attached to the front surface of the protective layer 45.

Thus, this may minimize the shrinkage or expansion rate of the lenticular lens array 40 due to heat from sunlight, thereby improving the uniformity of the 3D resolution of an HUD.

Here, the attachment layer 41 may be attached to the front surface of the first glass plate 50 as dots or a thin film by thin-film processing using one of deposition, printing, and application.

When the attachment layer 41 using a transparent UV curing agent is irradiated with ultraviolet (UV) light from a UV lamp operated at a selected distance from the surface of the first glass plate 50, UV radiation may pass through the transparent first glass plate to cure the UV-curable material, thereby enabling the lens layer 43 to adhere to the first glass plate 50.

In addition, the lenticular lenses uniformly arranged in the lens layer 43 are configured to provide different images to the left and right eyes of a user, respectively, in order to provide a 3D image. In this regard, the lenticular lenses have a semicircular cross-section, such as " 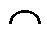 ", and are arranged in a continuous, repeating pattern across the front surface of the attachment layer 41.

In the lenticular lenses, the horizontal cross-sections of the long diameter are arranged on the attachment layer 41 to exhibit an effect similar to an array of continuously repeating convex lenses. Desirably, the lenticular lenses may be configured such that the long diameter length is at least 2 to 3 times the short diameter length of the arc shape, the curvature is small, and the overall short diameter length (or height) of the lenticular lens is increased. In this manner, the manufacturing efficiency may be improved.

In addition, the transparent protective layer 45 is attached to the front surface of the lenticular lens as a thin film by one of deposition, printing, and application. In this case, a UV curing agent may be used, and when a UV lamp is operated at a selected distance from the surface of the first glass plate 50 to radiate ultraviolet light, the ultraviolet light may pass through the transparent first glass plate to cure the UV curing agent, thereby fixing the protective layer 45 to the front surface of the lenticular lens.

The protective layer 45 increases the surface strength of the lens layer 43 and improves the uniformity of the 3D image by preventing the moiré phenomenon, which distorts images transmitted through the lenticular lens into wavy patterns.

Specifically, the lenticular lenses having a semicircular arc shape exhibit relatively larger curvature changes in the valley portions compared to the apex portions. This causes differences in light transmission between the apex and valley portions of the lenticular lens to form moiré patterns in 3D images. The protective layer 45 having a lower refractive index than the valley portions of the lenticular lens is provided on the front surface of the lens layer 43, thereby improving the uniformity of the 3D resolution.

The protective layer 45 is composed of a material having a lower refractive index than the lenticular lens, and is molded while filling the valley portions of the lenticular lens to reduce the curvature even when the lens height is increased, thereby improving manufacturing convenience and the uniformity of 3D resolution.

Furthermore, as shown in FIG. 3, the protective layer 45 filled in the groove portion of the lenticular lens does not cause changes in the height (SAG) or curvature of the lenticular lenses. Therefore, it is acceptable that to the protective layer 45 is formed to protrude beyond the apexes of the lenticular lenses.

The protective layer 45 is a composition including transparent silicone, such as liquid silicone rubber (LSR), having a light transmittance of 94% or higher, a UV curing agent, and polyurethane acrylate, which are mixed at approximate ratios of 3:6:1. Desirably, polyurethane acrylate particles having a size of 5 µm to 20 µm are mixed. A mixture of UV curing agent and polyurethane acrylate in an approximate ratio of 8:2 is also included in the disclosure.

The transparent second glass plate 55 is attached to the front surface of the protective layer 45. The second glass plate 55 has a thickness of at least 0.1 to 2T, and is configured to be attached to one surface, e.g., the front surface, of the protective layer 45 as a thin-film via an adhesive layer provided on one surface of the second glass plate by one of deposition and printing.

Therefore, in the lenticular lens array 40 disposed on the front surface of the first glass plate 50, the shrinkage or expansion rate of the lenticular lens array 40 due to heat from sunlight may be minimized by the second glass plate 55.

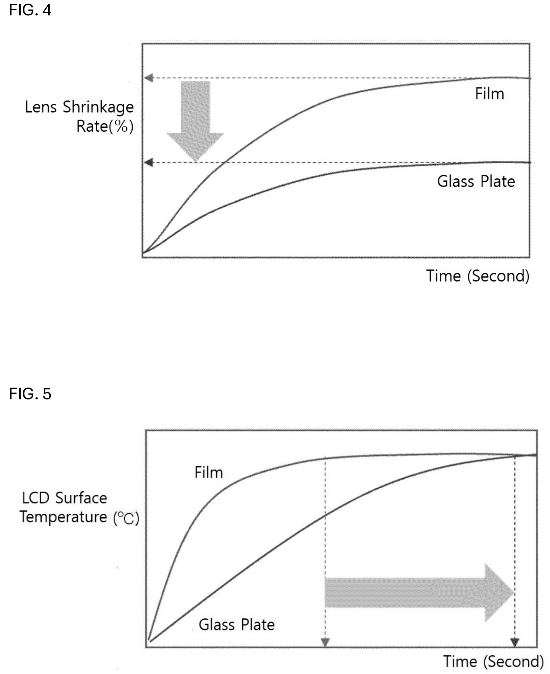

FIG. 4 is a graph comparing the shrinkage rates of an existing polymer synthetic resin film and a lenticular lens provided on a glass plate due to heat generated by the backlight unit 10 and sunlight, which indicates that the 3D optical lens layer 30 configured as described in the disclosure has a lower shrinkage rate.

FIG. 5 is a graph showing respective times taken until the temperatures of the conventional polymer synthetic resin film and the first glass plate 50 reach the surface temperature of the glass substrate 21 of the display panel 20. It may be appreciated that the temperature of the first glass plate 50 configured as described in the disclosure reaches the surface temperature of the glass substrate 21 of the display panel 20 at a later time than the temperature of the polymer synthetic resin film, thereby improving reliability.

Therefore, the spirit of the disclosure shall not be limited to the above-described embodiments, and the entire scope of the appended claims and equivalents thereof will fall within the scope and spirit of the disclosure.

### <Description of Reference Numerals of Drawings>

| | | | |
|---|---|---|---|
| 10: | backlight | 20: | display panel |
| 21: | glass substrate | 30: | 3D optical lens layer |
| 40: | lenticular lens array | 41: | attachment layer |
| 43: | lens layer | 45: | protective layer |
| 50: | first glass plate | 55: | second glass plate |

## Claims

1. A stereoscopic image display device having a multi-layer functional film structure, the stereoscopic image display device comprising:
a backlight unit (10);
a display panel (20) disposed on a front surface of the backlight unit (10); and
a three-dimensional optical lens layer (30) having a multi-layer structure, wherein the three-dimensional optical lens layer (30) is provided on a front surface of a glass substrate (21) and comprises a first glass plate (50) and a polymer-based lenticular lens array (40).

2. The stereoscopic image display device of claim 1, wherein the lenticular lens array (40) comprises:
an attachment layer (41) provided on the first glass plate (50);
a lens layer (43) provided on a front surface of the attachment layer (41) and comprising continuously-arranged lenticular lenses; and
a protective layer (45) having a lower refractive index than the lens layer (43) and provided on a front surface of the lens layer (43).

3. The stereoscopic image display device of claim 1, wherein the lenticular lens array (40) comprises:
an attachment layer (41) provided on the first glass plate (50);
a lens layer (43) provided on a front surface of the attachment layer (41) and comprising continuously-arranged lenticular lenses;
a protective layer (45) having a lower refractive index than the lens layer (43) and provided on a front surface of the lens layer (43); and
a second glass plate (55) attached to a front surface of the protective layer (45).

4. The stereoscopic image display device of claim 2 or 3, wherein the attachment layer (41) is attached to the front surface of the first glass plate (50) as dots or a thin film using one of deposition, printing, and application.

5. The stereoscopic image display device of claim 3, wherein the second glass plate (55) is attached to the front surface of the protective layer (45) as a thin film by one of deposition and printing.

6. The stereoscopic image display device of claim 2 or 3, wherein the lenticular lenses of the lens layer (43) have a semicircular cross-section, such as "", and are disposed on the front surface of the attachment layer (41) to provide different images to left and right eyes of a user, respectively, to provide a three-dimensional image.
